# FASCICULE DE BREVET EUROPEEN

(11) **EP 2 045 559 B1**
(45) Date de publication et mention de la délivrance du brevet: **22.08.2018**
(21) Numéro de dépôt: 08166126.6
(22) Date de dépôt: 03.07.2008
(51) Int. Cl.: C09D 5/08, C09D 5/14, C23C 26/00, F28F 13/18, F28F 17/00, F28F 19/04, F28D 21/00, F28F 21/08

(54) **Revêtement hydrophile pour un échangeur de chaleur**
Hydrophile Beschichtung für einen Wärmetauscher
Hydrophilic coating for a heat exchanger

(30) Priorité: 05.07.2007 FR 0704864; 03.07.2008 EP 08159594
(43) Date de publication de la demande: 08.04.2009
(62) Demande divisionnaire de: 08159594.4
(73) Titulaire: Valeo Systèmes Thermiques, 78321 Le Mesnil-Saint-Denis Cedex (FR)
(72) Inventeur: Tachot, Nicolas, 72000 Le Mans (FR); Casenave, Christian, 72210 La Suze sur Sarthe (FR)
(74) Mandataire: Metz, Gaëlle

(56) Documents cités:
- EP-A- 0 563 474
- WO-A-2006/126783
- FR-A- 2 873 797
- US-A- 5 376 411
- US-A- 5 916 635

## Description

La présente invention se rapporte au domaine des échangeurs de chaleur destinés à échanger de la chaleur entre deux fluides pour véhicules automobiles, et plus particulièrement aux évaporateurs ou au refroidisseur d'air de suralimentation brasés en aluminium ou en alliage d'aluminium présents dans les installations de climatisation d'un véhicule automobile. WO 2006/126783 décrit un tel échangeur de chaleur selon le préambule de la revendication 1. Dans les installations de climatisation de véhicules, un évaporateur est balayé par un flux d'air à refroidir. En raison de la température basse des surfaces de l'évaporateur exposées au flux d'air, l'humidité contenue dans ce dernier tend à se déposer sur ces surfaces, ce qui entraîne divers inconvénients. L'eau ainsi déposée réduit la section de passage de l'air et empêche un contact direct entre celui-ci et les surfaces métalliques de l'évaporateur, nuisant à la capacité d'échange de chaleur. Des gouttes d'eau sont projetées dans le flux d'air. Des souillures adhèrent sur les surfaces mouillées, favorisant une prolifération microbienne et la production d'odeurs désagréables.

Afin d'éviter ce dernier problème il a été proposé par le brevet FR 2837272, déposé par la demanderesse, un procédé de traitement de la surface d'un échangeur de chaleur du type évaporateur destiné d'une part à satisfaire aux nouvelles exigences techniques en supprimant l'utilisation et la présence d'ions chrome (hexachrome) tout en améliorant les qualités hydrophiles de la surface de sorte que les gouttes d'eau s'aplatissent le plus possible sur la surface de l'évaporateur afin d'une part de laisser passer le flux d'air et d'autre part de ne pas être envoyées directement dans l'habitacle.

Bien que ce procédé est montré toute son efficacité, il n'en demeure pas moins que le revêtement obtenu n'est pas suffisamment hydrophile pour éviter totalement les problèmes de rétention d'eau et en conséquence, en fonction de la forme de l'évaporateur et de la hauteur des tubes/intercalaires (dénommé « pitch ») lorsqu'elle est inférieure à un seuil (inférieure à 1,4 centimètre), l'évaporateur présente une perte de charge élevée et, en conséquence, conduit à des projections d'eau dans l'habitacle.

Augmenter la proportion de silicate organique par rapport au polyuréthane dans le revêtement améliore légèrement ses qualités hydrophiles mais il a été mis en évidence qu'au delà d'un seuil, le caractère hydrophile n'est plus amélioré, l'odeur peut réapparaître et la résistance à la corrosion peut également être affectée. En effet, en cherchant à augmenter les qualités hydrophiles d'un évaporateur de l'art antérieur, on détériore d'autant, voire considérablement, ses qualités de résistance à la corrosion. Les problèmes techniques sont sensiblement identiques pour un refroidisseur d'air de suralimentation ou tout autre échangeur de chaleur brasé en aluminium ou alliage d'aluminium dont le fluide à refroidir est de l'air.

Ainsi, à l'heure actuelle, les traitements de surface de l'art antérieur n'autorisent pas un bon mouillage de la surface, essentiellement à cause de la matière de brasage, et présentent des caractéristiques hydrophiles et de résistance à la corrosion qui ne sont pas optimums.

La présente invention entend remédier aux inconvénients en particulier des évaporateurs d'un circuit de climatisation d'un véhicule et des refroidisseurs d'air de suralimentation du bloc moteur.

Ainsi, l'invention concerne un échangeur de chaleur ayant les caractéristiques de la revendication 1. On entend par le terme « diamètre » le fait que chaque particule minérale s'inscrit dans une sphère dont le diamètre est inférieur ou égal à l'épaisseur de la couche, autrement dit la hauteur de la couche sur la surface de l'échangeur de chaleur.

Grâce à l'invention, on casse la tension de surface de la goutte d'eau sur la surface de l'échangeur de chaleur de sorte que la goutte s'étale bien sur toute la surface et qu'en conséquence l'air entrant dans l'échangeur de chaleur passe sans obstruction. Par ailleurs, en raison de leur taille particulière, les particules restent bien dans le film formé par la couche.

D'autres particularités ou caractéristiques sont présentées dans la suite :
- on recouvre les surfaces de l'échangeur de chaleur avec ledit liquide sans étape préalable de conversion de surface et/ou sans étape préalable de dégraissage/décapage desdites surfaces ;
- on recouvre les surfaces de l'échangeur de chaleur avec ledit liquide par pulvérisation. On entend par le terme « pulvérisation » le fait que l'échangeur de chaleur est aspergé de liquide selon l'invention ; le liquide étant ensuite séché pour former la couche adhérente finale conforme à l'invention.
- lesdites substances propres à conférer des propriétés filmogènes et anticorrosion sont des polymères choisis parmi les types polyuréthanne, époxy, silicone, acrylique, polyimine et polyurée, réticulés de manière à ne laisser subsister pratiquement aucun groupe hydrophile, et lesdites substances propres à conférer des propriétés hydrophiles sont choisies parmi la silice modifiée par la liaison de radicaux organiques à des atomes de silicium, l'oxyde de titane et les variétés hydrophiles de zéolites ;
- le rapport entre les substances aux propriétés filmogènes/anticorrosion et les substances aux propriétés hydrophiles est compris entre 5 et 40%, de préférence entre 8 et 12% ;
- les particules minérales présentent un diamètre au plus égal à 3 µm (micromètres), de préférence au plus égal à 100 nm (nanomètres) ;
- les particules minérales sont choisies parmi les oxydes, phosphates ou sulfates ;
- lesdites particules sont choisies parmi l'oxyde de zinc, le dioxyde de titane, le phosphate de zinc et le sulfate de baryum ;
- la couche comprend en outre des inhibiteurs de corrosion ;
- les inhibiteurs de corrosion sont choisis parmi des composés organiques tels que le benzothiazole et ses dérivés, le benzotriazole et ses dérivées, les sels d'acide benzoïque, les sels de carboxylate, les dérivées alkylénoxide, les complexes phosphore-boron, et préférentiellement des dérivées benzothiazole qui sont présents en quantité inférieure à 1% en masse de la susdite couche ;
- la couche comprend des composés fongicides, tels qu'un mélange de carbendazime et de 2-N-octyl-4-isothizoline-3-one, à une proportion inférieure à 1% en masse de ladite couche ;
- les composés fongicides comprennent en outre des particules d'argent, d'or, de cuivre, et d'oxyde de zinc.

Un mode de réalisation de l'invention sera décrit ci-après, à titre d'exemple non limitatif, en faisant référence aux dessins annexés dans lesquels :
- La figure 1 présente une photographie d'une couche adhérente de l'art antérieur ;
- la figure 2 présente quant à elle une photographie d'une couche adhérente selon la présente invention.

On note que les deux figures jointes en annexe sont à la même échelle.

La présente invention est décrite ici avec un évaporateur pour une utilisation particulièrement adaptée à un échangeur de fluide dont l'un des fluides est un réfrigérant de la boucle de climatisation, tel que le R134A (appellation de référence connue de l'homme du métier), le dioxyde de carbone (CO2) ou par exemple le fluide H, tandis que le fluide réfrigéré, c'est-à-dire celui qui est refroidi, est classiquement l'air qui, suite à son passage dans l'évaporateur, entre dans l'habitacle du véhicule. Une partie des problèmes ont été mis en évidence en liaison avec l'utilisation actuelle du fluide R134A mais ces problèmes ne sont pas propres à ce fluide et surviendront également avec les autres fluides réfrigérant, de façon similaire ou éventuellement de façon atténuée ou au contraire augmentée. Par ailleurs, comme précisé précédemment, l'invention ne se limite pas aux évaporateurs mais concerne tout type d'échangeurs de chaleur brasé en aluminium ou alliage d'aluminium dont le fluide à refroidir est de l'air. Enfin, il est envisageable que le procédé selon l'invention soit appliqué à d'autres types d'échangeur de chaleur ou même d'autres surfaces, sans que cela ait encore été envisagé par l'homme du métier.

On notera ainsi que l'homme du métier considéré pour la présente invention est un technicien du domaine des échangeurs de chaleur pour véhicules automobiles, et plus particulièrement des échangeurs de chaleur destinés à traiter thermiquement l'air alimentant l'habitacle d'un véhicule.

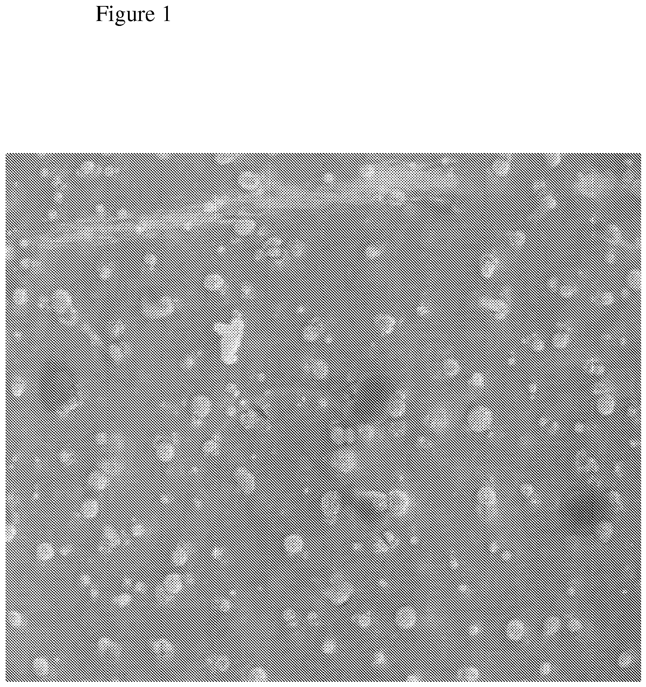

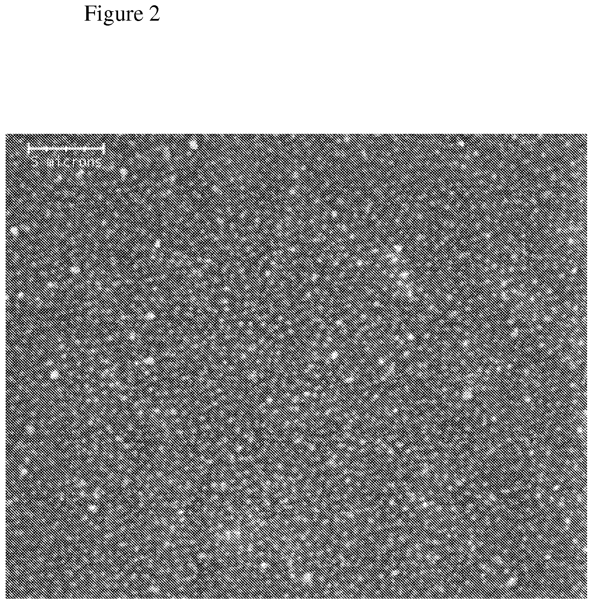

En observant la figure 1, on note que la couche adhérente est très irrégulière tandis que la couche adhérente selon l'invention, celle représentée sur la figure 2, est parfaitement uniforme. On note également que la taille des agglomérats, dans l'invention des particules minérales, est très différente. En effet, la couche adhérente de l'art antérieur présente des agglomérats de taille variés dont certains, voire la plupart, sont supérieurs à l'épaisseur, ou la hauteur, de la couche adhérente tandis que les particules minérales de la couche adhérente selon l'invention présentent sensiblement les mêmes tailles et que leurs tailles, ou plutôt leurs diamètres, sont toujours inférieures ou égal à celui de l'épaisseur, ou de la hauteur, de la couche adhérente.

L'étude et l'analyse d'une couche adhérente de l'art antérieur et d'une couche adhérente selon l'invention montre les résultats suivants :

| | | couche adhérente de l'art antérieur | couche adhérente selon l'invention |
|---|---|---|---|
| | structure de la surface | | |
| épaisseur g/m² | différence de poids | 0,7 +/- 0,3 | 1,5 +/- 1 |
| Procédé | | immersion + centrifugation | pulvérisation + séchage à l'air |
| Niveau Hydrophile | diamètre des gouttes d'eau | 8-10mm (millimètres) | 11-15 mm |
| | Angle de contact (des gouttes d'eau) | 50° (degré) | 25 - 30° |
| | rétention d'eau de l'évaporateur en g/dm² de surface frontale | 90 | 60 |
| Niveau d'odeur | à l'état neuf et après 72h de vieillissement de la surface externe dans un débit d'eau de 6l/min (*) | 1 - 2 (*) | 1 - 2(*) |
| résistance à la corrosion | 240h de brouillard salin neutre à l'état neuf et après vieillissement de la surface externe de l'échangeur dans un débit d'eau déminéralisée de 6l/min pendant 72h | 2-3 | 2-2 |
| Résistance à l'émission de poudre blanche | 42 jours en atmosphère chaude 50°C et humide supérieure à 85% d'humidité relative. Chaque jour est composé d'un cycle de 8 heures de condensation par passage dans le circuit interne d'un débit d'eau de 1l/min et de 16 h d'arrêt de la condensation | <1mg de poudre | <1mg de poudre |
| résistance microbienne% | résistance microbienne % | 100 | 100 |

On notera que le niveau d'odeur est défini par une échelle allant de 0 à 5 selon les définitions suivantes :
0 : aucune odeur perceptible,
1 : odeur faible demandant un effort d'attention tel, qu'elle est difficile à nommer,
2 : le sujet perçoit par simple flairage sans autre information,
3 : odeur perçue même lorsque l'attention du sujet est portée ailleurs,
4 : odeur puissante occupant l'attention du sujet et gênant ses autres activités intellectuelles ou sensorielles,
5 : odeur incontournable, polarisant l'esprit du sujet.

On notera que le niveau de résistance à la corrosion est défini par une échelle allant de 0 à 5 selon les définitions suivantes :
0: résistance à la corrosion égale à celle obtenue avec une chromatation contenant du chrome hexavalent,
2: résistance à la corrosion égale à celle obtenue avec une chromatation contenant uniquement du chrome trivalent,
4: résistance à la corrosion égale à celle du matériau sans traitement.

Pour ces tests, réalisés avec le type de couche adhérente selon l'art antérieur et celle selon la présente invention, un même type d'évaporateur est utilisé, à savoir un évaporateur à plaques assemblés par brasage sous atmosphère contrôlé, utilisant un flux de brasage non corrosif.

Les résultats significatifs mettent en évidence en particulier une bien meilleure mouillabilité de la surface de l'évaporateur comportant la couche adhérente selon l'invention. En effet, on constate que la valeur de l'angle de contact des gouttes est sensiblement divisée par 2 avec la couche adhérente selon l'invention (de l'ordre de 25° au lieu de 50°), la valeur de rétention d'eau est divisée de 2/3 et le diamètre des gouttes d'eau, c'est-à-dire leurs tailles, est augmenté d'environ 50%. Ces résultats démontrent un étalement des gouttes d'eau sur la surface de l'évaporateur, augmentant leur taille et diminuant leur épaisseur ou hauteur sur la surface de l'évaporateur, ce qui permet une bien meilleure circulation de l'air entrant dans l'évaporateur et évite la projection d'eau dans l'habitacle.

Un deuxième résultat significatif est obtenu concernant la résistance à la corrosion qui est améliorée de 2/3 qui revient à classer le niveau de résistance à la corrosion de l'évaporateur au niveau de résistance à la corrosion obtenue avec une chromatation contenant uniquement du chrome trivalent.

Par ailleurs, on note que le niveau d'odeur reste identique, c'est-à-dire à niveau tout à fait satisfaisant ; aucune odeur particulière ne se dégageant de l'évaporateur. On note également une résistance élevée aux atmosphères chaudes et humides à l'émission de poudre blanche bien que le film du présent art contienne plus de matière minérale susceptible de s'extraire du film.

L'homme de l'art pourra appliquer les concepts décrits à de nombreux autres systèmes similaires, en combinant à souhait les différentes réalisations et modes d'exécution présentés précédemment, sans sortir du cadre de l'invention défini dans les revendications jointes.

## Revendications

1. Echangeur de chaleur en aluminium ou alliage d'aluminium, en particulier pour un circuit de fluide réfrigérant dans une installation de climatisation de l'habitacle d'un véhicule, dans lequel les surfaces destinées à venir en contact avec un milieu à refroidir sont revêtues d'une couche adhérente contenant une ou plusieurs substances conférant à ladite couche des propriétés d'adhérence à la couche et des propriétés filmogènes, anticorrosion et hydrophiles et une ou plusieurs substances conférant à ladite couche des propriétés antimicrobiennes, la couche adhérente comprenant des particules minérales dont le diamètre est au plus égal à l'épaisseur de ladite couche, **caractérisé en ce que** l'échangeur de chaleur est brasé et **en ce que** la couche adhérente est uniforme et lesdites particules minérales présentant sensiblement les mêmes tailles, la part des particules minérales dans ladite couche étant comprise entre 10 et 60%, de préférence entre 20% et 30%.

2. Echangeur de chaleur selon la revendication précédente, dans lequel lesdites substances propres à conférer des propriétés filmogènes et anticorrosion sont des polymères choisis parmi les types polyuréthanne, époxy, silicone, acrylique, polyimine et polyurée, réticulés de manière à ne laisser subsister pratiquement aucun groupe hydrophile, et lesdites substances propres à conférer des propriétés hydrophiles sont choisies parmi la silice modifiée par la liaison de radicaux organiques à des atomes de silicium, l'oxyde de titane et les variétés hydrophiles de zéolites.

3. Echangeur de chaleur selon la revendication 1 ou 2, dans lequel le rapport entre les substances aux propriétés filmogènes/anticorrosion et les substances aux propriétés hydrophiles est compris entre 5 et 40%, de préférence entre 8 et 12%.

4. Echangeur de chaleur selon l'une quelconque des revendications précédentes, dans lequel les particules minérales présentent un diamètre au plus égal à 3 µm (micromètres), de préférence au plus égal à 100 nm (nanomètres).

5. Echangeur de chaleur selon l'une quelconque des revendications précédentes, dans lequel les particules minérales sont choisies parmi les oxydes, phosphates ou sulfates.

6. Echangeur de chaleur selon la revendication 5, dans lequel lesdites particules sont choisies parmi l'oxyde de zinc, le dioxyde de titane, le phosphate de zinc et le sulfate de baryum.

7. Echangeur de chaleur selon l'une quelconque des revendications précédentes, dans lequel la couche comprend en outre des inhibiteurs de corrosion.

8. Echangeur de chaleur selon la revendication 7, dans lequel les inhibiteurs de corrosion sont choisis parmi des composés organiques tels que le benzothiazole et ses dérivés, le benzotriazole et ses dérivées, les sels d'acide benzoïque, les sels de carboxylate, les dérivées alkylénoxide, les complexes phosphore-boron, et préférentiellement des dérivées benzothiazole qui sont présents en quantité inférieure à 1% en masse de la susdite couche.

9. Echangeur de chaleur selon l'une quelconque des revendications précédentes, dans lequel la couche comprend des composés fongicides, tels qu'un mélange de carbendazime et de 2-N-octyl-4-isothizoline-3-one, à une proportion inférieure à 1% en masse de ladite couche.

10. Echangeur de chaleur selon la revendication 9, dans lequel les composés fongicides comprennent en outre des particules d'argent, d'or, de cuivre, et d'oxyde de zinc dont la taille est inférieure à l'épaisseur du film.

11. Echangeur de chaleur selon l'une quelconque des revendications précédentes, dans lequel l'échangeur de chaleur est un évaporateur.

## Patentansprüche

1. Wärmetauscher aus Aluminium oder einer Aluminiumlegierung, insbesondere für einen Kühlfluidkreislauf in einer Klimaanlage eines Fahrzeuginnenraums, wobei die Flächen, die dazu bestimmt sind, mit einem zu kühlenden Medium in Kontakt zu gelangen, mit einer Haftschicht bedeckt sind, welche eine oder mehrere Substanzen, die der Schicht Hafteigenschaften an der Schicht und filmbildende, Antikorrosions- und hydrophile Eigenschaften verleihen, und eine oder mehrere Substanzen, die der Schicht antimikrobielle Eigenschaften verleihen, enthält, wobei die Haftschicht Mineralpartikel umfasst, deren Durchmesser höchstens gleich der Dicke der Schicht ist, **dadurch gekennzeichnet, dass** der Wärmetauscher gelötet ist, und dadurch, dass die Haftschicht gleichmäßig ist und die Mineralpartikel im Wesentlichen dieselben Größen aufweisen, wobei der Anteil der Mineralpartikel in der Schicht zwischen 10 und 60 %, vorzugsweise zwischen 20 % und 30 %, liegt.

2. Wärmetauscher nach dem vorhergehenden Anspruch, wobei die Substanzen, die geeignet sind, filmbildende und Antikorrosionseigenschaften zu verleihen, Polymere sind, die aus Polyurethan, Epoxy, Silikon, Acryl, Polyimin und Polyharnstoff ausgewählt sind, welche vernetzt sind, um praktisch keine hydrophile Gruppe zurückzulassen, und die Substanzen, die geeignet sind, hydrophile Eigenschaften zu verleihen, ausgewählt sind aus Siliciumdioxid, das durch die Bindung organischer Reste mit Siliciumatomen modifiziert ist, Titanoxid und den hydrophilen Varietäten von Zeolithen.

3. Wärmetauscher nach Anspruch 1 oder 2, wobei das Verhältnis zwischen den Substanzen mit filmbildenden/Antikorrosionseigenschaften und den Substanzen mit hydrophilen Eigenschaften zwischen 5 und 40 %, vorzugsweise zwischen 8 und 12 %, beträgt.

4. Wärmetauscher nach einem der vorhergehenden Ansprüche, wobei die Mineralpartikel einen Durchmesser von höchstens gleich 3 µm (Mikrometer), vorzugsweise höchstens gleich 100 nm (Nanometer), aufweisen.

5. Wärmetauscher nach einem der vorhergehenden Ansprüche, wobei die Mineralpartikel aus Oxiden, Phosphaten oder Sulfaten ausgewählt sind.

6. Wärmetauscher nach Anspruch 5, wobei die Partikel aus Zinkoxid, Titanoxid, Zinkphosphat und Bariumsulfat ausgewählt sind.

7. Wärmetauscher nach einem der vorhergehenden Ansprüche, wobei die Schicht außerdem Korrosionsinhibitoren umfasst.

8. Wärmetauscher nach Anspruch 7, wobei die Korrosionsinhibitoren aus organischen Verbindungen ausgewählt sind, wie Benzothiazol und seinen Derivaten, Benzotriazol und seinen Derivaten, Benzoesäuresalzen, Carboxylatsalzen, Alkylenoxid-Derivaten, Phosphor-Bor-Komplexen, und vorzugsweise Benzothiazol-Derivaten, die in einer Menge von weniger als 1 Masse-% der Schicht vorhanden sind.

9. Wärmetauscher nach einem der vorhergehenden Ansprüche, wobei die Schicht Fungizid-Verbindungen umfasst, wie eine Mischung von Carbendazim und 2-N-Octyl-4-isothiazolin-3-on, in einem Anteil von weniger als 1 Masse-% der Schicht.

10. Wärmetauscher nach Anspruch 9, wobei die Fungizid-Verbindungen außerdem Partikel aus Silber, Gold, Kupfer und Zinkoxid umfassen, deren Größe kleiner ist als die Dicke des Films.

11. Wärmetauscher nach einem der vorhergehenden Ansprüche, wobei der Wärmetauscher ein Verdampfer ist.

## Claims

1. Heat exchanger made of aluminium or aluminium alloy, in particular for a coolant circuit in an air-conditioning unit of the passenger compartment of a vehicle, in which the surfaces intended to come into contact with a medium to be cooled are coated with an adherent layer containing one or more substances that give said layer properties of adhesion to the layer and film-forming, corrosion-resistant and hydrophilic properties, and one or more substances that give said layer antimicrobial properties, the adherent layer comprising mineral particles, the diameter of which is at most equal to the thickness of said layer, **characterized in that** the heat exchanger is brazed and **in that** the adherent layer is uniform and said mineral particles have substantially the same sizes, the portion of the mineral particles in said layer being between 10% and 60%, preferably between 20% and 30%.

2. Heat exchanger according to the preceding claim, in which said substances suitable for imparting film-forming and corrosion-resistant properties are polymers chosen from the following types: polyurethane, epoxy, silicone, acrylic, polyimine and polyurea, which are crosslinked so as to leave practically no hydrophilic group remaining, and said substances suitable for imparting hydrophilic properties are chosen from silica modified by the bonding of organic radicals to silicon atoms, titanium oxide and hydrophilic varieties of zeolites.

3. Heat exchanger according to Claim 1 or 2, in which the ratio between the substances having film-forming/corrosion-resistant properties and the substances having hydrophilic properties is between 5% and 40%, preferably between 8% and 12%.

4. Heat exchanger according to any one of the preceding claims, in which the mineral particles have a diameter at most equal to 3 µm (micrometres), preferably at most equal to 100 nm (nanometres).

5. Heat exchanger according to any one of the preceding claims, in which the mineral particles are chosen from oxides, phosphates or sulfates.

6. Heat exchanger according to Claim 5, in which said particles are chosen from zinc oxide, titanium dioxide, zinc phosphate and barium sulfate.

7. Heat exchanger according to any one of the preceding claims, in which the layer further comprises corrosion inhibitors.

8. Heat exchanger according to Claim 7, in which the corrosion inhibitors are chosen from organic compounds such as benzothiazole and derivatives thereof, benzotriazole and derivatives thereof, benzoic acid salts, carboxylate salts, alkylene oxide derivatives, phosphorus-boron complexes, and preferentially benzothiazole derivatives that are present in an amount of less than 1% by weight of the aforesaid layer.

9. Heat exchanger according to any one of the preceding claims, in which the layer comprises fungicidal compounds, such as a mixture of carbendazim and 2-N-octyl-4-isothiazolin-3-one, in a proportion of less than 1% by weight of said layer.

10. Heat exchanger according to Claim 9, in which the fungicidal compounds further comprise particles of silver, of gold, of copper and of zinc oxide, the size of which is smaller than the thickness of the film.

11. Heat exchanger according to any one of the preceding claims, in which the heat exchanger is an evaporator.
